# FASCICULE DE BREVET EUROPEEN

(11) **EP 3 016 820 B1**
(45) Date de publication et mention de la délivrance du brevet: **25.08.2021**
(21) Numéro de dépôt: 14745201.5
(22) Date de dépôt: 02.07.2014
(51) Int. Cl.: B60Q 1/04

(54) **PROJECTEUR DE VÉHICULE AUTOMOBILE**
KRAFTFAHRZEUGSCHEINWERFER
MOTOR VEHICLE HEADLIGHT

(30) Priorité: 03.07.2013 FR 1356469
(43) Date de publication de la demande: 11.05.2016
(73) Titulaire: PSA Automobiles SA, 78300 Poissy (FR)
(72) Inventeur: BESSETTE, Damien, F-25150 Ecot (FR); MERESSE, Ludovic, F-25200 Montbéliard (FR)
(86) Numéro de dépôt international: PCT/FR2014/051696
(87) Numéro de publication internationale: WO 2015/001256

(56) Documents cités:
- EP-A1- 1 400 406
- EP-A1- 2 112 020
- DE-A1- 10 143 676
- DE-A1-102009 022 216
- FR-A1- 2 887 197
- JP-A- 2007 015 453

## Description

La présente invention concerne un projecteur de véhicule automobile situé dans une zone sensible aux chocs de ce véhicule.

On connaît un projecteur dont le boîtier est fixé à la caisse du véhicule par des pattes de fixation fusibles se rompant lors d'un choc appliqué au projecteur pour déplacer le boîtier vers l'arrière du véhicule. Cependant, cette fixation fusible nécessite un espace libre ménagé derrière le boîtier du projecteur et incompatible avec le contexte d'implantation actuelle des projecteurs, où la place disponible autour de ceux-ci est réduite, d'autant plus que les projecteurs actuels ont des dimensions de plus en plus importantes et sont implantés en avant des principaux éléments d'absorption des chocs.

En cas de choc, le projecteur recule pour venir s'empiler contre les éléments se situant derrière lui.

On connaît également du document FR2789028 un projecteur dont le boîtier est constitué de plusieurs parties pouvant s'encastrer l'une dans l'autre et reliées par une zone frangible de telle sorte que, lorsqu'un choc est appliqué au boîtier, ce dernier se déplace par rapport à la caisse du véhicule jusqu'à ce qu'il vienne en appui avec un support fixe provoquant la rupture de la zone frangible et la pénétration successive des parties constitutives du boîtier les unes dans les autres. Ce projecteur connu présente les mêmes inconvénients que ceux du projecteur à pattes de fixation fusibles.

En outre, ces deux solutions ne sont pas adaptées à des formes de glaces allongées du projecteur et qui, lors d'un recul consécutif à un choc, déforment l'aile avant du véhicule jusqu'à empêcher l'ouverture des portes avant de ce véhicule.

On connaît également du document FR2887197 un projecteur dont la glace comporte sur au moins une partie de sa périphérie une zone d'affaiblissement frangible.

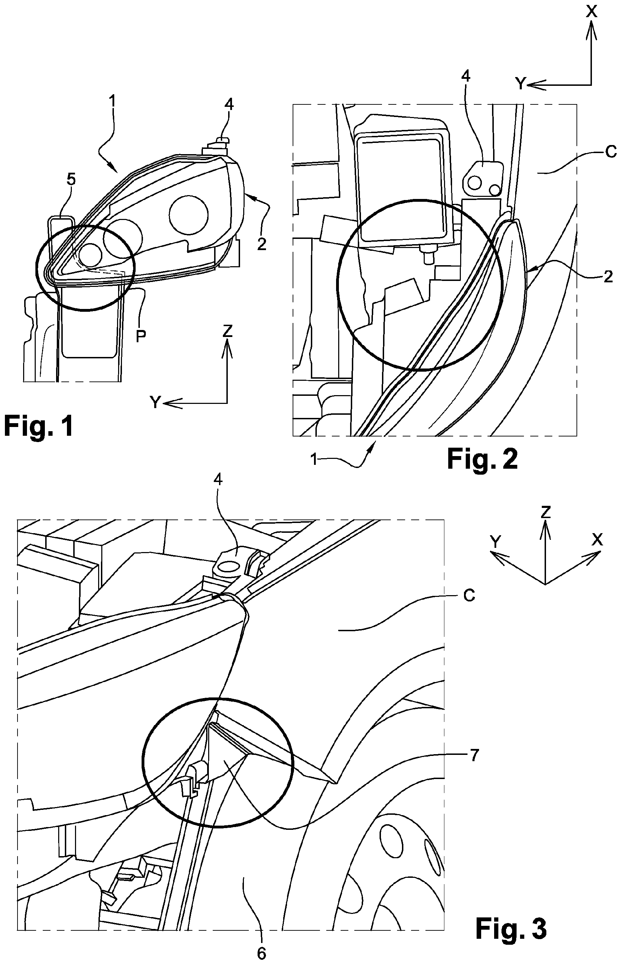

Les figures 1 et 2 permettent d'illustrer le contexte de l'invention.

La référence 1 désigne un projecteur d'éclairage avant d'un véhicule automobile pouvant être implanté au-dessus du pare-chocs avant du véhicule.

Le boîtier 2 du projecteur 1 est monté sur la caisse C du véhicule et peut être fixé à celle-ci par au moins une patte 4.

Une pièce rigide indéformable 5 en tôle, solidaire de la caisse C du véhicule est disposée en regard de la partie arrière du boîtier 2 du projecteur 1. Comme représenté en figure 1, la pièce rigide 5 est constituée par un pendard pouvant supporter des efforts allant jusqu'à 500 daN avant déformation.

La pièce de structure rigide 5 constitue un appui de la partie arrière du boîtier 2 dans la direction du choc en étant disposée perpendiculairement à cette direction.

Etant donné que la pièce de structure rigide 5, désignée également par appui de façade, se situe seulement à 10 mm du boîtier 2 du projecteur 1, le contact entre les deux éléments 5 et 1 est inévitable. Le nombre de pièces impactés par le choc peut être relativement important : cloquage des brancards, appuis de façade déformés, détérioration de la façade de refroidissement (GMV), du boîtier de servitude moteur (BSM), des contacts électriques, déformation des ailes avant...

L'objectif de la présente invention est de contrôler la déformation du projecteur en cas d'un choc frontal de 250daN maximum en minimisant l'impact sur les autres composants du véhicule tout en éliminant les inconvénients ci-dessus.

A cet effet, la présente invention a pour objet, un projecteur de véhicule automobile comprenant un boîtier destiné à être monté sur la caisse du véhicule, une glace de protection en matériau rigide et transparent à la lumière, solidarisée sur la partie avant du boîtier, caractérisé en ce que ledit projecteur comprend au moins une zone d'affaiblissement frangible ménagée sur la partie arrière du boîtier, en ce qu'il comporte en outre au moins un moyen de rupture agencé à l'interface entre le rebord arrière de la glace et le rebord périphérique avant du boîtier, permettant de désolidariser la glace du boîtier en cas de choc frontal du projecteur.

Selon une caractéristique, la glace comporte, sur au moins une partie du rebord périphérique de sa face arrière, une pluralité de protubérances en appui sur le rebord périphérique avant du boîtier, celles-ci étant aptes à désolidariser la glace du boîtier lors d'un choc appliqué sur la face avant de la glace.

Selon une autre caractéristique, le rebord périphérique avant du boîtier comporte une gorge recevant le bord périphérique arrière de la glace.

Selon une autre caractéristique, les protubérances viennent en appui dans le fond de la gorge.

Selon une autre caractéristique, le rebord périphérique avant du boîtier comporte au moins une zone d'affaiblissement frangible, et la glace comporte également au moins une zone d'affaiblissement frangible en regard du rebord périphérique avant du boîtier, de manière à désolidariser la glace du boîtier lors d'un choc appliqué sur la face avant de la glace.

Selon une autre caractéristique, la partie arrière de la glace définit un gradin permettant de raccorder la glace au boîtier ; la zone d'affaiblissement frangible de la glace étant réalisée dans la partie de la glace formant gradin, en regard du rebord périphérique avant du boîtier.

Selon une autre caractéristique, le rebord périphérique avant du boîtier comporte une gorge recevant le bord périphérique arrière de la glace.

Selon une autre caractéristique, la zone d'affaiblissement frangible est réalisée dans le fond de la gorge.

Selon une autre caractéristique, le contour du boîtier définit une pointe qui est la partie destinée à être la plus avancée du véhicule quand le projecteur est monté dans le véhicule et donc la partie destinée à être exposée en premier à un choc frontal, caractérisé en ce que les zones d'affaiblissement frangibles délimitent et/ou sont comprises dans ladite pointe.

L'invention a pour autre objet, un véhicule comportant un projecteur tel que décrit ci-dessus, caractérisé en ce que la partie du projecteur affleurant l'aile correspondante du véhicule, est fixée sur deux points d'appui fixes de la caisse du véhicule pour empêcher le recul du boîtier lors du choc appliqué à la glace, et en ce que la partie du contour du projecteur formant une pointe, est disposée en regard d'une pièce rigide contre laquelle la pointe du projecteur est destinée à s'écraser en cas de choc frontal.

Grâce à l'objet de la présente invention, la pointe de projecteur qui est la partie du projecteur la plus en avant du véhicule, va absorber une partie du choc en s'écrasant progressivement sur l'appui de façade.

Le projecteur étant suffisamment maintenu sur sa partie extérieure, son recul est quasiment inexistant. La BSM n'est alors plus impactée et l'aile est légèrement modifiée mais redressable.

Les frais de réparation sont alors considérablement réduits.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple dans lesquels :
- la figure 1, déjà décrite, est une vue de face partielle d'un projecteur avant gauche, monté sur la caisse d'un véhicule dont la pointe est en vis-à-vis d'un appui de façade ;
- la figure 2, déjà décrite, est une vue de dessus partielle du projecteur avant gauche de la figure 1, monté sur la caisse du véhicule ;
- la figure 3 est une vue partielle en perspective d'un boîtier de projecteur selon l'invention et ses moyens de fixation extérieurs sur la caisse d'un véhicule ;
- la figure 4 est une vue en perspective de l'arrière du projecteur selon l'invention ;
- la figure 5 est une vue de détail de l'arrière du boîtier du projecteur selon l'invention ;
- la figure 6 est une vue en coupe longitudinale schématique d'un premier mode de réalisation d'un projecteur selon l'invention ; et
- la figure 7 est une vue en coupe longitudinale schématique d'un second mode de réalisation d'un projecteur selon l'invention.

Les éléments représentés sur les figures sont orientés à l'intérieur d'un même repère orthonormé XYZ et les éléments identiques sont désignés par les mêmes références alphanumériques.

Le boîtier 2 peut être réalisé en métal rigide et supporte une glace de protection 3 en matériau rigide transparent à la lumière fixée au boîtier 2 au-devant de celui-ci. Le rebord périphérique arrière 3c de la glace 3 est logé dans le rebord périphérique avant 2a du boîtier 2 définissant une gorge G dans laquelle la glace 3 est solidarisée par tout moyen approprié, par exemple par collage. Le matériau de la glace 3, qui constitue la pièce la plus rigide du projecteur 1, est quasiment incassable lors d'un choc, même violent, et à cet effet, elle peut être à base de polycarbonate.

Dans les deux modes de réalisation selon l'invention tels que décrits ci-après en référence aux figures 3 à 7, le fond 2b du boîtier 2 comporte des zones d'affaiblissement frangibles Z2b au niveau de la partie en pointe P du projecteur 1.

Ces zones Z2b définissent des lignes de striction constituées par un amincissement du fond 2b relativement à l'épaisseur générale du fond 2b du boîtier 2 et une ou plusieurs rainures réalisées dans la face arrière du fond du boîtier en regard de l'appui de façade 5.

L'agencement des lignes de striction Z2b permet, lors d'un choc appliqué à la face avant 3a de la glace 3, suivant le sens symbolisé par la flèche F1, sensiblement parallèle à la direction longitudinale du véhicule, de favoriser l'écrasement du boîtier 2 et de la glace 3 sur l'appui de façade 5, uniquement sur la partie de contour du projecteur formant une pointe P.

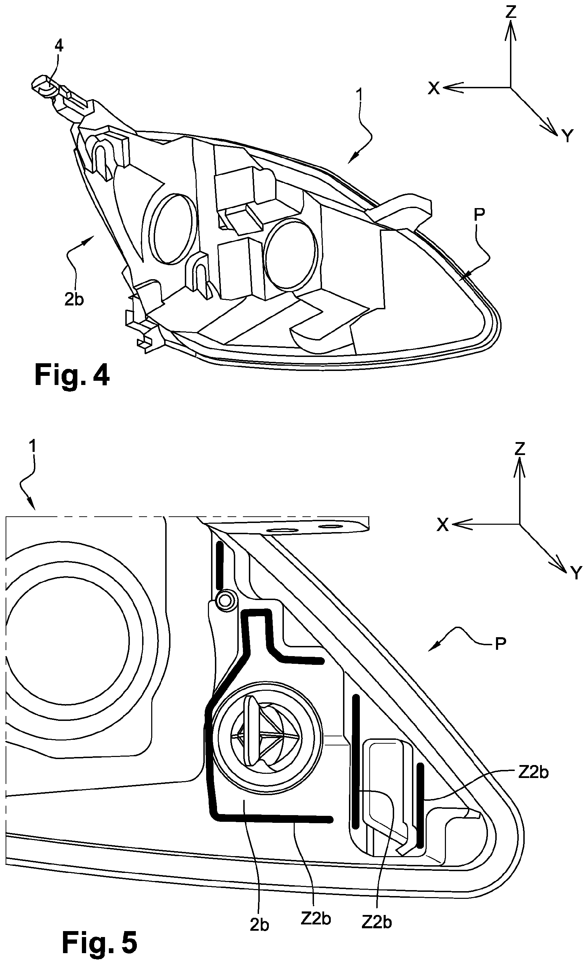

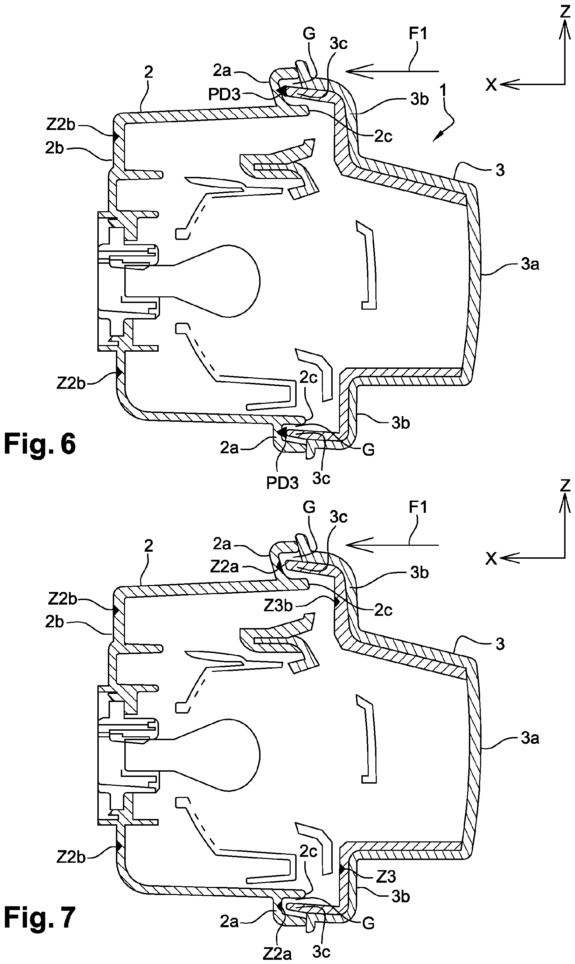

Dans le premier mode de réalisation, en référence aux figures 5 et 6, pour provoquer la rupture de la zone d'affaiblissement Z2b du boîtier 2 sous un choc, on prévoit d'abord de cisailler la partie avant 2a du boîtier 2 au niveau de la gorge de collage G.

A cet effet, le rebord périphérique arrière 3c de la glace 3 est muni de protubérances ayant par exemple la forme de dents PD3 aptes à favoriser le cisaillement de la gorge G qui va céder en premier lors du choc suivant la flèche F1 pour créer un premier point d'amortissement.

Dans la continuité du choc selon la flèche F1, la glace 3 qui comporte un rebord périphérique arrière 3c en forme de gradin 3b par rapport à sa face avant 3a, va ensuite rencontrer le rebord périphérique avant 2c du boîtier 2 (deuxième point d'amortissement) et provoquer le cisaillement du fond 2b du boîtier 2 et contribuer à son écrasement sur l'appui de façade 5.

Dans le second mode de réalisation, en référence aux figures 5 et 7, la glace 3 comporte, sur sa partie en forme de gradin 3b, une zone Z3b d'affaiblissement frangible située au voisinage de la gorge de collage G du boîtier 2. La zone d'affaiblissement frangible Z3b est constituée par un amincissement du gradin 3b relativement à l'épaisseur générale de la paroi latérale et frontale de la glace 3 et une ou plusieurs rainures réalisées dans la face du gradin 3b de la glace 3 tournée vers le boîtier 2.

Le boîtier 2 comporte également une zone d'affaiblissement frangible Z2a dans la gorge de collage G.

Lors d'un choc suivant la direction de la flèche F1, c'est la zone d'affaiblissement frangible Z2a du boîtier 2 qui va céder en premier quand le bord périphérique arrière 3c de la glace 3 va appuyer dans le fond de la gorge de collage G du boîtier 2 du fait de la rigidité de la glace 3, supérieure à celle de la gorge 2a. Puis, c'est la zone d'affaiblissement Z3b qui va céder en venant en contact avec le rebord périphérique avant 2c du boîtier 2. La rupture de la glace 3 au niveau de la gorge de collage G est ainsi amplifiée par rapport au premier mode de réalisation.

Les étapes de cisaillement et d'écrasement du fond du boîtier restent ensuite identiques à celles du premier mode de réalisation.

Il est à noter que la partie du rebord périphérique formant gradin 3b de la glace 3, où se trouve la zone d'affaiblissement Z3b, est invisible de l'extérieur en position montée du projecteur 1 sur le véhicule. Bien entendu, la zone d'affaiblissement retenue reste compatible avec les contraintes auxquelles doit répondre la glace et dont les principales sont son aspect, son style, son démoulage, son injection, ses épaisseurs calculées pour la photométrie et son étanchéité.

En référence à la figure 3, pour limiter et, le cas échéant, empêcher le déplacement du boîtier 2 du projecteur 1 dans l'aile correspondante du véhicule, la paroi latérale de ce boîtier est en appui sur une patte de fixation blindée 6 de la doublure d'aile 7 dont la rigidité est plus élevée que celle du boîtier 2 pour empêcher le recul de l'aile du véhicule et, par conséquent, tout risque d'endommager la porte avant correspondante du véhicule lors du choc appliqué à la glace 3.

Ainsi, lors d'un choc appliqué à la glace 3 du projecteur 1, dû par exemple à un piéton P renversé par le véhicule, la force résultante F1 prend en étau le projecteur entre l'appui de façade 5, la patte de fixation inférieure blindée 6 et la patte de fixation supérieure 4, pour provoquer le cisaillement de la glace 3 et du boîtier 2 puis l'écrasement de la pointe P du projecteur sur l'appui de façade 5.

La solution de l'invention permet ainsi de casser la glace du projecteur au niveau de sa zone d'affaiblissement frangible, de limiter, voire même d'éliminer, les efforts transmis à l'aile correspondante du véhicule lors d'un choc, tout en protégeant les composants mécaniques environnants implantés sous le capot du véhicule.

## Revendications

1. Projecteur (1) de véhicule automobile, comprenant un boîtier (2) destiné à être monté sur la caisse du véhicule, une glace (3) de protection en matériau rigide et transparent à la lumière, solidarisée sur la partie avant (2a) du boîtier (2), **caractérisé en ce que** ledit projecteur (1) comprend au moins une zone d'affaiblissement frangible (Z2b) ménagée sur le fond (2b) du boîtier (2), **en ce qu'**il comporte en outre au moins un moyen de rupture (PD3 ; Z2a, Z3b) agencé à l'interface entre le rebord arrière (3c) de la glace (3) et le rebord périphérique avant (2a) du boîtier (2), permettant de désolidariser la glace (3) du boîtier (2) en cas de choc frontal du projecteur (1).

2. Projecteur (1) selon la revendication précédente, **caractérisé en ce que** la glace (3) comporte, sur au moins une partie du rebord périphérique de sa face arrière (3c), une pluralité de protubérances (PD3) en appui sur le rebord périphérique avant (2a) du boîtier (2), celles-ci étant aptes à désolidariser la glace (3) du boîtier (2) lors d'un choc appliqué sur la face avant (3a) de la glace (3).

3. Projecteur (1) selon la revendication précédente, **caractérisé en ce que** le rebord périphérique avant (2a) du boîtier (2) comporte une gorge (G) recevant le bord périphérique arrière (3c) de la glace (3).

4. Projecteur (1) selon la revendication précédente, **caractérisé en ce que** les protubérances (PD3) viennent en appui dans le fond de la gorge (G).

5. Projecteur (1) selon la revendication 1, **caractérisé en ce que** le rebord périphérique avant (2a) du boîtier (2) comporte au moins une zone d'affaiblissement frangible (Z2a), et **en ce que** la glace (3) comporte également au moins une zone d'affaiblissement frangible (Z3b) en regard du rebord périphérique avant (2a) du boîtier (2), de manière à désolidariser la glace (3) du boîtier (2) lors d'un choc appliqué sur la face avant (3a) de la glace (3).

6. Projecteur (1) selon la revendication précédente, **caractérisé en ce que** la partie arrière de la glace (2) définit un gradin (3b) permettant de raccorder la glace (2) au boîtier (2) ; la zone d'affaiblissement frangible (Z3b) de la glace (3) étant réalisée dans la partie de la glace (3) formant gradin (3b), en regard du rebord périphérique avant (2a) du boîtier (2).

7. Projecteur (1) selon la revendication précédente, **caractérisé en ce que** le rebord périphérique avant (2a) du boîtier (2) comporte une gorge (G) recevant le bord périphérique arrière (3c) de la glace (3).

8. Projecteur (1) selon la revendication précédente, **caractérisé en ce que** la zone d'affaiblissement frangible (Z2a) du rebord périphérique avant (2a) du boîtier (2) est réalisée dans le fond de la gorge (G).

9. Projecteur (1) selon l'une des revendications précédentes, dont le contour du boîtier (2) définit une pointe (P) qui est la partie destinée à être la plus avancée du véhicule quand le projecteur (1) est monté dans le véhicule et donc la partie destinée à être exposée en premier à un choc frontal, **caractérisé en ce que** les zones d'affaiblissement frangibles (Z2a, Z2b et Z3b) délimitent et/ou sont comprises dans ladite pointe (P).

10. Véhicule comportant un projecteur (1) selon la revendication précédente, **caractérisé en ce que** la partie du projecteur affleurant l'aile correspondante du véhicule, est fixée sur deux points d'appui fixes (4 et 6) de la caisse du véhicule pour empêcher le recul du boîtier (2) lors du choc appliqué à la glace (3), et **en ce que** la partie du contour du boîtier (2) formant une pointe (P), est disposée en regard d'une pièce rigide (5) contre laquelle la pointe (P) du projecteur (1) est destinée à s'écraser en cas de choc frontal.

## Patentansprüche

1. Kraftfahrzeugscheinwerfer (1), umfassend ein Gehäuse (2), das dazu bestimmt ist, an der Karosserie des Fahrzeugs angebracht zu werden, eine Schutzscheibe (3) aus einem starren, lichtdurchlässigen Material, die mit dem vorderen Teil (2a) des Gehäuses (2) fest verbunden ist, **dadurch gekennzeichnet, dass** der Scheinwerfer (1) mindestens eine zerbrechliche Schwächungszone (Z2b) umfasst, die am Boden (2b) des Gehäuses (2) vorgesehen ist, dass er außerdem mindestens ein Bruchmittel (PD3 ; Z2a, Z3b), die an der Schnittstelle zwischen dem hinteren Rand (3c) der Streuscheibe (3) und dem vorderen Umfangsrand (2a) des Gehäuses (2) angeordnet sind und die Trennung der Streuscheibe (3) vom Gehäuse (2) im Falle eines Frontalaufpralls des Scheinwerfers (1) ermöglichen.

2. Scheinwerfer (1) nach dem vorhergehenden Anspruch, **dadurch gekennzeichnet, dass** die Streuscheibe (3) auf mindestens einem Teil des Umfangsrandes ihrer Rückseite (3c) eine Vielzahl von Vorsprüngen (PD3) aufweist, die sich am vorderen Umfangsrand (2a) des Gehäuses (2) abstützen, wobei diese geeignet sind, die Streuscheibe (3) bei einem auf die Vorderseite (3a) der Streuscheibe (3) ausgeübten Stoß vom Gehäuse (2) zu trennen.

3. Scheinwerfer (1) nach dem vorhergehenden Anspruch, **dadurch gekennzeichnet, dass** der vordere Umfangsrand (2a) des Gehäuses (2) eine Nut (G) aufweist, die den hinteren Umfangsrand (3c) der Linse (3) aufnimmt.

4. Scheinwerfer (1) nach dem vorhergehenden Anspruch, **dadurch gekennzeichnet, dass** die Vorsprünge (PD3) im Boden der Nut (G) zu liegen kommen.

5. Scheinwerfer (1) nach Anspruch 1, **dadurch gekennzeichnet, dass** der vordere Umfangsrand (2a) des Gehäuses (2) mindestens eine zerbrechliche Schwächungszone (Z2a) aufweist, und dass die Linse (3) außerdem mindestens eine zerbrechliche Schwächungszone (Z3b) gegenüber dem vorderen Umfangsrand (2a) des Gehäuses (2) aufweist, um die Linse (3) von dem Gehäuse (2) zu trennen, wenn ein Stoß auf die Vorderseite (3a) der Linse (3) ausgeübt wird.

6. Scheinwerfer (1) nach dem vorhergehenden Anspruch, **dadurch gekennzeichnet, dass** der hintere Teil der Linse (2) eine Stufe (3b) definiert, die es ermöglicht, die Linse (2) mit dem Gehäuse (2) zu verbinden; wobei die zerbrechliche Schwächungszone (Z3b) der Linse (3) in dem die Stufe (3b) bildenden Teil der Linse (3) gegenüber dem vorderen Umfangsrand (2a) des Gehäuses (2) hergestellt ist.

7. Scheinwerfer (1) nach dem vorhergehenden Anspruch, **dadurch gekennzeichnet, dass** der vordere Umfangsrand (2a) des Gehäuses (2) eine Nut (G) aufweist, die den hinteren Umfangsrand (3c) der Linse (3) aufnimmt.

8. Scheinwerfer (1) nach dem vorhergehenden Anspruch, **dadurch gekennzeichnet, dass** die zerbrechliche Schwächungszone (Z2a) des vorderen Umfangsrandes (2a) des Gehäuses (2) im Boden der Nut (G) ausgebildet ist.

9. Scheinwerfer (1) nach einem der vorhergehenden Ansprüche, dessen Kontur des Gehäuses (2) einen Punkt (P) definiert, der der Teil ist, der dazu bestimmt ist, am weitesten vorne im Fahrzeug zu sein, wenn der Scheinwerfer (1) im Fahrzeug montiert ist, und daher der Teil ist, der dazu bestimmt ist, zuerst einem Frontalaufprall ausgesetzt zu sein, **dadurch gekennzeichnet, dass** die zerbrechlichen Schwächungszonen (Z2a, Z2b und Z3b) den Punkt (P) begrenzen und/oder darin enthalten sind.

10. Fahrzeug mit einem Scheinwerfer (1) nach dem vorhergehenden Anspruch, **dadurch gekennzeichnet, dass** der Teil des Scheinwerfers, der mit dem entsprechenden Flügel des Fahrzeugs bündig ist, an zwei festen Stützpunkten (4 und 6) der Karosserie des Fahrzeugs befestigt ist, um den Rückstoß des Gehäuses (2) während des auf die Scheibe (3) ausgeübten Stoßes zu verhindern, und dass der einen Punkt (P) bildende Teil der Kontur des Gehäuses (2) gegenüber einem starren Teil (5) angeordnet ist, gegen das der Punkt (P) des Scheinwerfers (1) im Falle eines Frontalaufpralls prallen soll.

## Claims

1. Motor vehicle headlight (1), comprising a housing (2) intended to be mounted on the body of the vehicle, a protective lens (3) made of a rigid material which is transparent to light, secured to the front part (2a) of the housing (2), **characterised in that** the said headlight (1) comprises at least one frangible weakening zone (Z2b) provided on the base (2b) of the housing (2), **in that** it also comprises at least one breaking means (PD3 ; Z2a, Z3b) arranged at the interface between the rear edge (3c) of the lens (3) and the front peripheral edge (2a) of the casing (2), making it possible to separate the lens (3) from the casing (2) in the event of a frontal impact of the headlight (1).

2. Headlamp (1) according to the preceding claim, **characterized in that** the lens (3) comprises, on at least part of the peripheral edge of its rear face (3c), a plurality of protuberances (PD3) bearing on the front peripheral edge (2a) of the casing (2), these being capable of disconnecting the lens (3) from the casing (2) during an impact applied to the front face (3a) of the lens (3).

3. Headlamp (1) according to the preceding claim, **characterized in that** the front peripheral edge (2a) of the housing (2) comprises a groove (G) receiving the rear peripheral edge (3c) of the lens (3).

4. Headlamp (1) according to the preceding claim, **characterized in that** the protrusions (PD3) come to rest in the bottom of the groove (G).

5. Headlamp (1) according to claim 1, **characterized in that** the front peripheral edge (2a) of the housing (2) comprises at least one frangible weakening zone (Z2a) and **in that** the lens (3) also comprises at least one frangible weakening zone (Z3b) opposite the front peripheral edge (2a) of the housing (2), so as to separate the lens (3) from the housing (2) when an impact is applied to the front face (3a) of the lens (3).

6. Headlamp (1) according to the preceding claim, **characterized in that** the rear part of the lens (2) defines a step (3b) allowing the lens (2) to be connected to the housing (2); the frangible weakening zone (Z3b) of the lens (3) being produced in the part of the lens (3) forming the step (3b), opposite the front peripheral edge (2a) of the housing (2).

7. Headlamp (1) according to the preceding claim, **characterized in that** the front peripheral edge (2a) of the housing (2) comprises a groove (G) receiving the rear peripheral edge (3c) of the lens (3).

8. Headlamp (1) according to the preceding claim, **characterized in that** the frangible weakening zone (Z2a) of the front peripheral edge (2a) of the housing (2) is made in the bottom of the groove (G).

9. Headlamp (1) according to one of the preceding claims, the contour of the casing (2) of which defines a point (P) which is the part intended to be the most advanced of the vehicle when the headlamp (1) is mounted in the vehicle and therefore the part intended to be exposed first to a frontal impact, **characterized in that** the frangible weakening zones (Z2a, Z2b and Z3b) delimit and/or are included in the said point (P).

10. Vehicle comprising a headlamp (1) according to the preceding claim, **characterized in that** the part of the headlamp flush with the corresponding wing of the vehicle is fixed to two fixed support points (4 and 6) of the body of the vehicle in order to prevent the recoil of the casing (2) during the impact applied to the glass (3), and **in that** the part of the contour of the housing (2) forming a point (P) is arranged opposite a rigid part (5) against which the point (P) of the headlamp (1) is intended to crash in the event of a frontal impact.
